# EUROPEAN PATENT APPLICATION

(11) **EP 2 993 825 A2**
(43) Date of publication of application: **09.03.2016**
(21) Application number: 15183890.1
(22) Date of filing: 04.09.2015
(51) Int. Cl.: H04L 12/24

(54) **NETWORK ENTITY DISCOVERY AND SERVICE STITCHING**

(30) Priority: 08.09.2014 IN DE25552014
(71) Applicant: ALCATEL LUCENT, 92100 Boulogne-Billancourt (FR)
(72) Inventor: DESAI, Mayank, 560045 BANGALORE (IN); ANTONY, Saji, 560045 BANGALORE (IN)
(74) Representative: Sciaux, Edmond

(57) **Abstract**

Method comprises obtaining a network snapshot of a plurality of network entities existing at a predetermined discovery level. Network entity delta between the network snapshot and a previous network snapshot is computed. Network entity delta indicates modifications made to the predetermined discovery level since capturing of a preceding network snapshot. At least one network entity, existing at the predetermined discovery level, which was not previously registered in a service management database (118), is ascertained. The at least one network entity is service stitched with one or more network entities based on service stitching rules and entity catalogs to define associations between the at least one network entity and the one or more network entities for activating the at least one network entity. Each entity catalog defines attributes of the corresponding network entity and parent-child relationship between the corresponding network entity and another network entity.

## Description

### FIELD OF INVENTION

The present subject matter relates to communication networks and, particularly, but not exclusively, to discovery and service stitching of network entities in the communication network.

### BACKGROUND

The term Operational Support Systems (OSS) generally refers to information processing systems that assist an organization in managing their communications networks. An OSS allows an organization to coordinate resources, processes and activities to design, build, operate, and maintain communication networks. For example, an OSS may be implemented to perform management, network configuration, and fault management functionality for a telecommunication network.

Conventionally, activities relating to management of communication networks were carried out manually. However, with the advent of technology, various computing systems have been implemented by service providers to manage the operations of the communication networks. Generally, each of these systems behaves as a stand-alone system or a disparate functional unit and interoperability between different systems becomes challenging. Efforts are made to enable interoperability between different OSS based systems.

### SUMMARY

This summary is provided to introduce concepts related to discovery and service stitching of network entities in a communication network. This summary is not intended to identify essential features of the claimed subject matter nor is it intended for use in determining or limiting the scope of the claimed subject matter.

In one implementation, a method for discovery and service stitching of network entities in a communication network is disclosed. The method comprises obtaining a network snapshot of a plurality of network entities existing in a communication network. The network snapshot may indicate attribute data corresponding to the plurality of network entities. The plurality of network entities corresponds to a predetermined discovery level of the communication network. The method further comprises computing network entity delta between the network snapshot and at least one previous network snapshot stored in a network management database. The network entity delta indicates modifications made to the predetermined discovery level since capturing of a preceding network snapshot. The method further comprises ascertaining at least one network entity, existing at the predetermined discovery level, that was not previously registered in a service management database, based on the network entity delta. The method further comprises service stitching the at least one network entity with one or more network entities based on service stitching rules and entity catalogs. The service stitching defines associations between the at least one network entity and the one or more network entities for activating the at least one network entity. Each entity catalog defines attributes of the corresponding network entity and parent-child relationship between the corresponding network entity and another network entity.

In another implementation, a network entity discovery and stitching system is described. The network entity discovery and stitching system comprises a processor and a mediation engine coupled to the processor to obtain a network snapshot of a plurality of network entities existing in a communication network, the network snapshot indicating attribute data corresponding to the plurality of network entities. The plurality of network entities corresponds to a predetermined discovery level of the communication network. The network entity discovery and stitching system further comprises a discovery engine coupled to the processor to compute network entity delta between the network snapshot and at least one previous network snapshot stored in a network management database. The network entity delta indicates modifications made to the predetermined discovery level since capturing of a preceding network snapshot. The network entity discovery and stitching system further comprises an audit engine coupled to the processor to ascertain at least one network entity, existing at the predetermined discovery level, that was not registered in a service management database, based on the network entity delta. The network entity discovery and stitching system further comprises a service stitching module coupled to the processor to service stitch the at least one network entity with one or more network entities based on service stitching rules and entity catalogs. The service stitching defines associations between the at least one network entity and the one or more network entities for activating the at least one network entity. Each entity catalog defines attributes of the corresponding network entity and parent-child relationship between the corresponding network entity and another network entity

In yet another implementation of the present subject matter, a non-transitory computer readable medium having a set of computer readable instructions for executing a method for discovery and service stitching of network entities in a communication network is disclosed. The method comprises obtaining a network snapshot of a plurality of network entities existing in a communication network. The network snapshot may indicate attribute data corresponding to the plurality of network entities. The plurality of network entities corresponds to a predetermined discovery level of the communication network. The method further comprises computing network entity delta between the network snapshot and at least one previous network snapshot stored in a network management database. The network entity delta indicates modifications made to the predetermined discovery level since capturing of a preceding network snapshot. The method further comprises ascertaining at least one network entity, existing at the predetermined discovery level, that was not previously registered in a service management database, based on the network entity delta. The method further comprises service stitching the at least one network entity with one or more network entities based on service stitching rules and entity catalogs. The service stitching defines associations between the at least one network entity and the one or more network entities for activating the at least one network entity. Each entity catalog defines attributes of the corresponding network entity and parent-child relationship between the corresponding network entity and another network entity.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1(a) illustrates an exemplary network environment implementation of a network entity discovery and stitching system, according to an embodiment of the present subject matter;
Figure 1(b) illustrates an exemplary EPIPE model constructed by discovery and service stitching, according to an implementation of the present subject matter;
Figure 2 illustrates an exemplary call flow diagram for service stitching of network entities, according to an embodiment of the present subject matter;
Figure 3 illustrates a method for network entity discovery and stitching, according to an embodiment of the present subject matter;
Figure 4 illustrate a method for reconciliation of network entities for service stitching, according to an embodiment of the present subject matter;
Figure 5 illustrate a method for reconciliation of network entities for service stitching, according to another embodiment of the present subject matter.

### DESCRIPTION OF EMBODIMENTS

Service providers, such as Telecom vendors may use various systems, such as operational support system (OSS) for managing their communication network. The systems may be used to monitor and manage several network entities deployed within and associated with the communication network for providing services to users. Examples of the network entities include network equipment, resources, logical terminations, links, paths, and services. The network equipment include physical elements, such as routers, switches, chassis of a router, and multiplexers. The resources include the specific components, such as shelves, slots, and cards deployed within the network elements. The links are physical connections established between physical terminations of the same network equipment or of two different network equipment. The logical terminations may be understood as the entry and exit points for a link where the traffic enters and exits the link for providing a service and are hosted by the network equipment. Paths may be defined as the logical connections between two logical terminations and are deployed over a link. The traffic usually travels over the path for carrying data between two network equipment. The services include customer-facing services, such as broadband services and resource-facing services, such as Ethernet services, and EPIPE services. The services are passed over the other network entities existing in the communication network for providing end-to-end services, such as Internet or VPN connectivity to users.

To provide end-to-end services, such as VPN connectivity, a service provider may have to combine or stitch together various network entities, such as the network equipment, resources, links, resource-facing services, and customer-facing services to establish data flow connectivity between a service center and a user equipment deployed in the user's premise. In order to stitch the various services, the service providers typically obtain data about existing network entities from the various systems and databases deployed by other service providers providing the different services. Once the data about the different network entities is obtained, the services providers may stitch together the various network entities to establish the connection for providing the service. Such an approach involves a lot of time and manual effort to discover and transfer data from one system to another.

According to an implementation of the present subject matter, system(s) and method(s) for discovery and service stitching of network entities in a communication network are described. In an example, the communication network may be a multi-domain network. In one example, within each domain, the network entities may be deployed at different levels of discovery, such as a first discovery level (L1), a second discovery level (L2), a third discovery level (L3), and a fourth discovery level (L4). In one implementation, discovery and service stitching of the network entities may be performed for each domain such that during discovery of network entities of a particular domain, the network entities of that particular domain are stitched together for providing a domain specific resource-facing service that can be further stitched with a customer-facing service to provide the end to end service. Further, within a domain, the discovery and service stitching of the network entities may be performed for each discovery level such that during discovery of network entities of a particular discovery level, the network entities of that particular discovery level and discovery levels preceding the particular discovery level are stitched together. Performing the simultaneous discovery and service stitching of network entities helps in reducing the time and resources utilized in deploying end-to-end services over the communication network.

In said implementation, attribute data corresponding to a plurality of network entities existing in the communication network at a predetermined discovery level, say L3, is obtained. In one example, the attribute data may be obtained using a discovery process. The attribute data may include network entity related detail, such as entity type, entity name, and entity characteristics. The attribute data is then transformed using a normalized format to obtain a network snapshot. Further, the network snapshot is compared with data stored in a network management database to obtain a network entity delta. In one example, the network snapshot is compared with a previous network snapshot stored in the network management database. Further, the network entity delta indicates modifications made to the predetermined discovery level since capturing of a preceding network snapshot. In one example, the modifications may include inclusions and exclusions of network entities at the predetermined discovery level in the communication network.

Subsequently, the network entity delta is compared with a service management database to determine if any discrepancy exists between the network entity delta and data stored in the service management database. A discrepancy may be defined as a difference in data, corresponding to the plurality of network entities, stored in the service management database and actual data captured in the network entity delta. For example, the discrepancy may indicate that a network entity existing at the predetermined discovery level has not been registered in the service management database. Further, at least one network entity, existing at the predetermined discovery level, that has not been registered in the service management database, is ascertained based on the discrepancy and in turn, the network entity delta.

Further, it is determined if the at least one network entity has to be associated with one or more network entities for making the at least one network entity functional. In one example, the one or more network entities may be determined using service stitching rules and an entity catalog associated with the at least one network entity. An entity catalog may be defined as a catalog that defines attributes of the corresponding network entity and parent-child relationship between the corresponding network entity and another network entity. Thus, based on the entity catalog of the at least one network entity, the one or more entities may be determined and entity catalogs for each of the one or more network entities may be further obtained to determine their corresponding attributes. Service stitching of the at least one network entity with the one or more network entities may be subsequently completed based on the parent-child rules ascertained using the service stitching rules and the entity catalogs. In one example, the one or more network entities may also include network entities associated with lower or preceding discovery levels. The stitching of the network entities may complete the construction of a service model which then can be utilized for the purpose of service activation.

Subsequently, the discrepancies are reconciled in the service management database by adding the attribute data corresponding to the network entity in the service management database. The discrepancies may be reconciled to register and activate the network entities that have previously not been registered and activated. In one example, the activation may include changing of attributes of network entities depending on services provided and network entities in use. Further, based on the stitched network entities and created service model, service assurance may also be undertaken where impact analysis and root cause analysis may be completed for different services. Further, in some situations, automatic operations recovery may also be provided based on the constructed service model.

The present subject matter thus provides an automated network entity discovery and stitching system that for simultaneous discovery and service stitching of network entities. The simultaneous discovery and service stitching helps in reducing the time and resources utilized in deploying end-to-end services over the communication network. Further, using as a single system for performing the discovery and service stitching of network entities facilitates in collating data related to network entities in a single database that may be referred at later stages by a service provider for network management related services, such as fault monitoring.

It should be noted that the description and figures merely illustrate the principles of the present subject matter. It will thus be appreciated that those skilled in the art will be able to devise various arrangements that, although not explicitly described or shown herein, embody the principles of the present subject matter. Furthermore, all examples recited herein are principally intended expressly to be for pedagogical purposes to aid the reader in understanding the principles of the present subject matter and the concepts contributed by the inventor(s) to furthering the art, and are to be construed as being without limitation to such specifically recited examples and conditions. Moreover, all statements herein reciting principles, aspects, and embodiments of the present subject matter, as well as specific examples thereof, are intended to encompass equivalents thereof.

It will also be appreciated by those skilled in the art that the words during, while, and when as used herein are not exact terms that mean an action takes place instantly upon initiating an action but that there may be some small but reasonable delay, such as a propagation delay, between the initial action and the reaction that is initiated by the initial action. Additionally, the words "connected" and "coupled" are used throughout for clarity of the description and can include either a direct connection or an indirect connection.

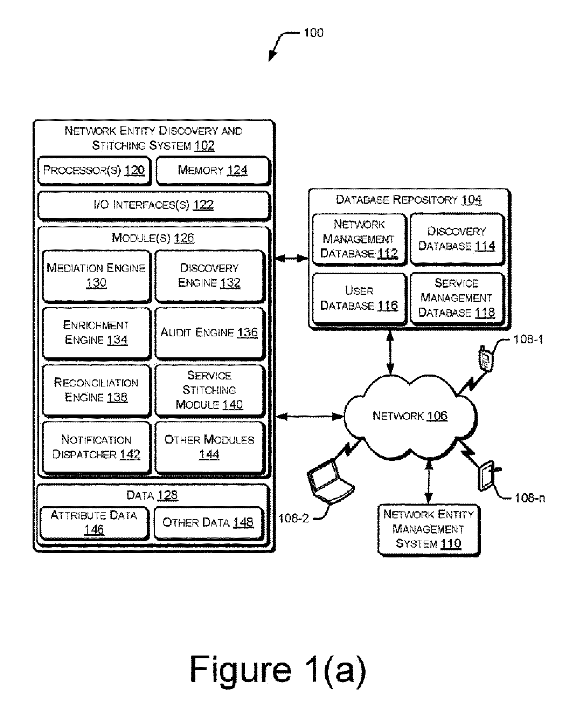

The manner in which the systems and the methods of the present subject matter may be implemented has been explained in details with respect to the Figures 1a to 5. While aspects of described system(s) and method(s) of the present subject matter can be implemented in any number of different computing systems, environments, and/or configurations, the embodiments are described in the context of the following system(s).

Figure 1(a) illustrates an exemplary network environment 100 implementing a network entity discovery and stitching system 102, according to an embodiment of the present subject matter. The network entity discovery and stitching system 102 is hereinafter referred to as the system 102. In said embodiment, the system 102 interacts with a database repository 104 over a network for obtaining and storing data related to network entities associated with one or more communication networks serviced by the system 102. The system 102 may further interact with one or more user devices 108-1, 108-2, ...., 108-n, hereinafter collectively referred to as user devices 108, and individually referred to as a user device 108 of service providers associated with the one or more communication networks. The system 102 may further interact with a network entity management system 110, over the network 106, maintained by the service providers for deploying and monitoring the network elements.

The system 102 can be implemented as a variety of servers and communication devices. The communication devices that can implement the described method(s) include, but are not limited to, central directory servers, database server, web server, application server, and the like. The system 102 may also be implemented as a computing device, such as a laptop computer, a desktop computer, a notebook, a workstation, a mainframe computer, a server, and the like. The database repository 104 may include one or more databases, such as network management database 112, discovery database 114, user database 116, and service management database 118. In one example, the database repository 104 may be implemented as a single repository with all the databases implemented over a single server. In another example, the database repository 104 may be implemented as a distributed repository implemented using one or more servers with the databases implemented over multiple servers.

The network 106 may be a wireless or a wired network, or a combination thereof. The network 106 can be a collection of individual networks, interconnected with each other and functioning as a single large network (e.g., the internet or an intranet). Examples of such individual networks include, but are not limited to, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Public Switched Telephone Network (PSTN), and Integrated Services Digital Network (ISDN). Depending on the technology, the network 106 includes various network elements, such as gateways and routers; however, such details have been omitted for ease of understanding.

Further, examples of the user devices 106, include but are not limited to, smart phones, mobile phones, PDA, tablets, hand-held devices, laptops, desktop computers, and network computers. The user devices interact with each other and other network devices (not shown in the figure) over the network 106.

In one implementation, the system 102 includes processor(s) 120, I/O interface(s) 122, and memory 124 coupled to the processor 120. The processor(s) 120 may be implemented as one or more microprocessors, microcomputers, microcontrollers, digital signal processors, central processing units, state machines, logic circuitries, and/or any devices that manipulate signals based on operational instructions. Among other capabilities, the processor(s) 120 is configured to fetch and execute computer-readable instructions stored in the memory 124.

The functions of the various elements shown in the figure, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared.

The I/O interfaces 122 may include a variety of software and hardware interfaces that allow the system 102 to interact with the network 106, the user devices 108 and other communication and computing devices, such as web servers and external repositories. The memory 124 may include any computer-readable medium known in the art including, for example, volatile memory (e.g., RAM), and/or non-volatile memory (e.g., EPROM, flash memory, etc.).

Further, the system 102 includes modules 126 and data 128. The modules 126 include routines, programs, objects, components, data structures, and the like, which perform particular tasks or implement particular abstract data types. The modules 126 further include modules that supplement applications on the system 102, for example, modules of an operating system.

Further, the modules 126 can be implemented in hardware, instructions executed by a processing unit, or by a combination thereof. The processing unit can comprise a computer, a processor, such as the processor 120, a state machine, a logic array or any other suitable devices capable of processing instructions. The processing unit can be a general-purpose processor which executes instructions to cause the general-purpose processor to perform the tasks or, the processing unit can be dedicated to perform the functions.

In another aspect of the present subject matter, the modules 126 may be machine-readable instructions (software) which, when executed by a processor/processing unit, perform any of the described functionalities. The machine-readable instructions may be stored on an electronic memory device, hard disk, optical disk or other machine-readable storage medium or non-transitory medium. In one implementation, the machine-readable instructions can also be downloaded to the storage medium via a network connection. The data 128 serves, amongst other things, as a repository for storing data that may be fetched, processed, received, or generated by one or more of the modules 126.

In an implementation, the modules 126 include a mediation engine 130, a discovery engine 132, an enrichment engine 134, an audit engine 136, a reconciliation engine 138, a service stitching module 140, a notification dispatcher 142, and other module(s) 144. Further, the data 128 include attribute data 146, and other data 148. The other data 148 comprise data corresponding to one or more other module(s) 144.

According to an embodiment of the present subject matter, the system 102 is provided for discovery and service stitching of the network entities associated with the communication network. In one example, the communication network may be a multi-domain network having network entities belonging to different domains, such as fiber optics and Ethernet for providing end-to-end services, such as internet or VPN connectivity to a customer of the service provider hosting the end-to-end service. Examples of the network entities include network equipment, resources, logical terminations, links, paths, and services. In an example, a service provider intending to provide an end-to-end service, say, internet through a broadband connection may use the system 102 to identify and discover the various network entities associated with the communication network that may be used for providing the broadband connection from the service provider's station to the customer's premise. The system 102, on receiving such a request may initially discover the currently existing network entities and then determine what other network entities need to be implemented and stitched together with the existing network entities for providing the end-to-end service. Further, the system 102 may also determine which of the currently existing network entities have not yet been activated and thus register and activate them and stitch together with the activated network entities.

In one operation, upon receiving a network entity discovery and activation request from the user device 108, a scheduler (not shown in the figure) of the system 102 may initially determine different domains whose network entities will be involved in rendering the end-to-end service. For instance, in the above example, the scheduler may determine that various resource-facing services (RFS), such as Gigabit-capable Passive Optical Networks (GPON), EPIPE, and Ethernet of different domains might have to be connected to obtain the broadband connection, i.e., a customer-facing service (CFS) for providing the internet service. In one example, the scheduler may obtain such data from the discovery database 114. The scheduler may further determine the different discovery levels for which discovery of network entities have to be performed.

In one example, the network entities may be classified into different levels, such as a first discovery level (L1), a second discovery level (L2), a third discovery level (L3), and a fourth discovery level (L4) depending on the depth and extent of data that has to be discovered. In one implementation, physical elements, such as network equipment are classified and discovered at the first discovery level. Examples of the network equipment include, but are not limited to, routers, switches, chassis of a router, multiplexers, Optical Network Terminal (ONT), Base transceiver station (BTS), and Radio Network Controller (RNC). At the second discovery level, resources, i.e., specific components, deployed within the network elements are discovered. Examples of the resources include, but are not limited to, shelves, slots, cards, and physical terminations, like ports.

All logical terminations and inter-element connections, such as links and paths are classified and discovered at the third discovery level. The links may be defined as physical connections, such as Ethernet, established between resources of the same network equipment or of two different network equipment. The logical terminations may be understood as the entry and exit points for a link where the traffic enters and exits the link for providing a service and are hosted by the network equipment. Paths may be defined as the logical connections between two logical terminations and are deployed over a link. The traffic usually travels over the path for carrying data between two network equipment. Examples of the logical terminations include, but are not limited to, Service Access Point (SAP), channel group, lag group, IP interface, network interface, and virtual local area networks (VLANs). At the fourth discovery level, services deployed within the network elements are discovered. Examples of the services include, but are not limited to, CFS, such as broadband connectivity and Internet Protocol television (IPTV), and RFS, such as GPON, EPIPE, and Ethernet.

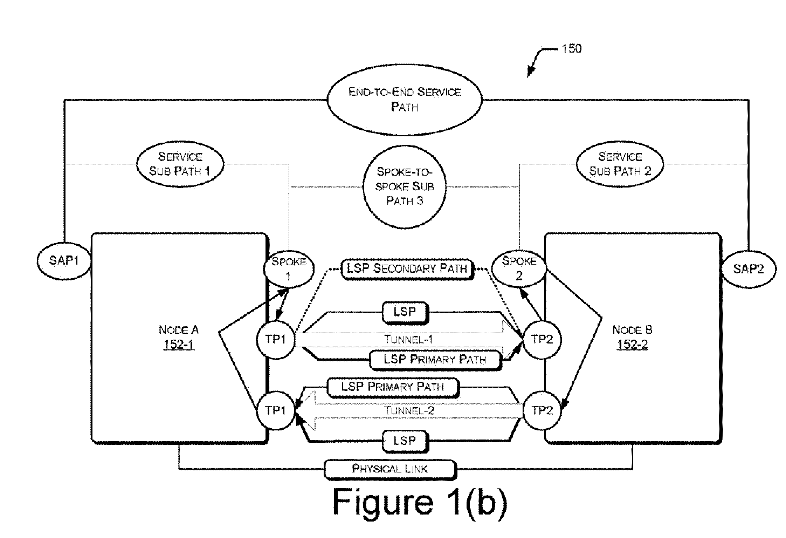

On determining the different discovery levels, the scheduler may initiate network entity discovery for each discovery level. In one example, the scheduler may initiate discovery in a chronological order, beginning with the first discovery level and moving up to the fourth discovery level. Further, in one example, the scheduler may initiate network entity discovery for each domain separately. In another example, the scheduler may initiate network entity discovery for all domains together. For instance, in the previous example of providing the internet service, the scheduler may initiate separate network entity discovery processes for GPON, EPIPE, and Ethernet. An exemplary EPIPE service model 150 is illustrated in the figure 1(b) for which the system 102 may perform the discovery and service stitching. Further, in one example, the service stitching may be performed only during discovery of network entities at L3 and L4, and the network entities discovered and activated at L1 and L2 may be stitched with L3 network entities during the discovery of L3 network entities.

As previously described, the scheduler may initially initiate network entity discovery for L1 and send a L1 discovery request to the mediation engine 130 for performing the discovery. On receiving the L1 discovery request, the mediation engine 130 may obtain the attribute data corresponding to a plurality of network entities existing in the communication network at the predetermined discovery level, i.e., L1. In one implementation, the mediation engine 130 may obtain the attribute data from either the network entities, i.e., the network equipment present at L1 or from the network entity management system 110. The attribute data may include network entity related detail, such as entity type, module information of the network entity, features of the network entity, identifier (ID) of the network entity, and entity characteristics/specification, such as entity name, version, and state. The mediation engine 130 may then transform the attribute data using a normalized format to obtain a network snapshot. In one example, the mediation engine 130 may transform the attribute data using entity catalog, such as a service catalog, stored in the discovery database 114.

In one implementation, the network snapshot may be further enriched by the enrichment engine 134 based on user customized rules to modify the network snapshot according to user requirement. The enrichment engine 134 may obtain the user customized rules from the user database 116. The network snapshot may then be saved in the attribute data 146. In another implementation, the network snapshot may be directly saved in the attribute data 146, without performing any enrichment. The network snapshot is subsequently obtained by the discovery engine 132 and compared with data stored in the network management database 112 to compute a network entity delta. In one example, the discovery engine 132 compares the network snapshot with a previous network snapshot stored in the network management database 112. The network entity delta indicates modifications made to the predetermined discovery level, i.e., L1 in the current situation, since capturing of a preceding network snapshot. In one example, the modifications may include inclusions and exclusions of network entities at the predetermined discovery level in the communication network. The discovery engine 132 may subsequently save the network entity delta in a data discrepancy table in the discovery database 114. The discovery engine 132 may further save the network snapshot in the network management database 112.

In one implementation, the network snapshot may be then examined against a set of user defined validation rules to determine if the currently discovered network entities have been configured according to user requirements. Validation results thus obtained may be saved in the discovery database 114 for being used by the service provider to make any modifications or updates to the network entities in accordance to the validation results.

The network entity delta may then be used by the audit engine 136 to determine if any discrepancy exists between the network entity delta and the service management database 118. The service management database 118 includes, for example, attribute data of registered network entities. In one example, the discrepancy may indicate that at least one network entity, identified in the network delta, has been added at L1 since capturing of the preceding network snapshot and has not been registered and activated. The audit engine 136 may accordingly generate audit results including the discrepancy and severity of the discrepancy based on the determining. The audit engine 136 may further save the audit results in the discovery database 114.

Subsequently, the reconciliation engine 138 may add the attribute data corresponding to the network entity in the service management database 118 to reconcile the discrepancies. As will be understood, the reconciliation engine 138 may reconcile the discrepancies to register and activate the network entity. In one implementation, the service management database 118 may be maintained by a vendor hosting the system 102. In another implementation, the service management database 118 may be maintained by a vendor other than the vendor hosting the system 102. Further, in one implementation, the reconciliation engine 138 may initially determine whether the reconciliation can be performed by the system 102, using a set of predefined reconciliation rules. In case the reconciliation can not be performed by the system 102, the reconciliation engine 138 may generate an alert indicating that manual intervention may be required for reconciliation. The alert may be transmitted by the notification dispatcher 142 to the user device 108 for being resolved by the service providers or other experts. In case, the reconciliation has been performed by the system 102, the notification dispatcher 142 may generate batch results having a summary of the discovered network entities, network entity delta, and audit results. The notification dispatcher 142 may subsequently transmit the batch results to the user device 108.

Upon completion of network entity discovery for L1, the scheduler may initiate network entity discovery for the second discovery level, L2. On receiving a L2 discovery request, the mediation engine 130 may obtain the attribute data corresponding to a plurality of network entities existing in the communication network at L2. As previously described, the mediation engine 130 may obtain the attribute data from either the network entities, i.e., the resources present at L2 or from the network management system 110. The mediation engine 130 may then transform the attribute data using a normalized format to obtain a network snapshot. The network snapshot for L2 may then be processed in a manner as described for L1 to determine if any network entity has been added at L2 since capturing of a preceding network snapshot and has not been registered and activated. In case, any of the discovered entities has not been registered and activated, the reconciliation engine 138 may update the service management database 118 to register and activate the network entity. Further, the notification dispatcher 142 may generate and transmit batch results for L2 to the user device 108.

Upon completion of network entity discovery for L2, the scheduler may initiate network entity discovery for the third discovery level, L3. On receiving a L3 discovery request, the mediation engine 130 may obtain the attribute data corresponding to a plurality of network entities existing in the communication network at L3. As previously described, the mediation engine 130 may obtain the attribute data from either the network entities, i.e., the logical terminations and inter-element connections, such as links and paths existing at L3 in the communication network or from the network management system 110. The mediation engine 130 may then transform the attribute data using a normalized format to obtain a network snapshot. The network snapshot for L3 may then be processed in a manner as described for L1 to compute the network entity delta.

The audit engine 136 may then process the network entity delta to ascertain if any network entity has been added at L3 since capturing of a preceding network snapshot and has not been registered and activated. In one implementation, the audit engine 136 initially compares the network entity delta with the service management database 118 to determine if any discrepancy exists between the network entity delta and the service management database 118. The audit engine 136 may accordingly generate audit results including the discrepancy and severity of the discrepancy based on the determining. As will be understood, the severity may indicate the impact or level of discrepancy.

In case, the audit engine 136 ascertains at least one network entity, existing at the predetermined discovery level (L3), that was not registered in the service management database 118, the audit engine 136 may update the reconciliation engine 138 to update the service management database 118 to register and activate the network entity. The audit engine 136 may further send a service stitching request to the service stitching module 140 for service stitching, i.e., defining associations between the at least one network entity and one or more network entities for activating the at least one network entity. The one or more network entities may be understood as network entities that have to be associated with the at least one network entity for making the at least one network entity functional.

On receiving the service stitching request, the service stitching module 140 may initially obtain an entity catalog associated with the at least one network entity based on one or more predefined service stitching rules. An entity catalog may be defined as a catalog that defines attributes of the corresponding network entity and association, such as a parent-child relationship between the corresponding network entity and another network entity. The service stitching module 140 may then analyze the entity catalog to determine the one or more network entities having parent-child relationship with the at least one network entity. For instance, on ascertaining that a path has not been registered in the service management database 118, the service stitching module 140 may analyze the entity catalog corresponding to the path and determine that the path has a parent-child relationship with a logical termination and has to be associated with it.

The service stitching module 140 may further obtain entity catalogs associated with each of the one or more network entities based on one or more predefined service stitching rules to determine if further network entities have to be associated with the one or more network entities. For instance, the service stitching module 140 may analyze the entity catalog corresponding to the path and determine that the logical termination has a parent-child relationship with a physical termination and has to be associated with it. In one implementation, the service stitching module 140 may further analyze the service management database 118 and external databases, using a recon adapter of the reconciliation engine 138, to determine the one or more network entities. The service stitching module 140 may subsequently define associations between the at least one network entity and the one or more network entities.

In one implementation, the service stitching module 140 may use the following parameters defined in the entity catalogs to associate the network entities for service stitching: 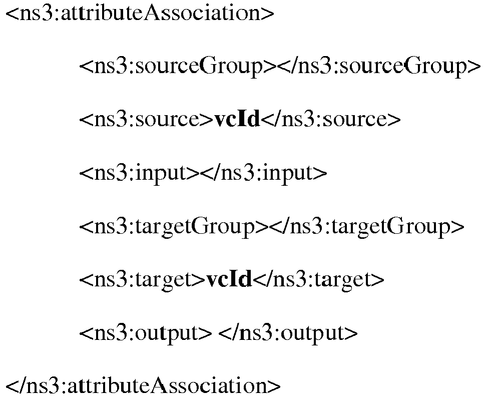 where 'vcId' are service attribute that may be determined through 'expectedAttribute', i.e., attribute data of the respective entity catalogs.

The service stitching module 140 may further update the audit result to indicate that the service management database 118 has to be analyzed to determine whether the one or more network entities have been previously registered or not. In one example, the service stitching module 140 may further update the audit result to perform at least one of, adding or updating the network entities, adding parent node with determined parent name (if the parent is not previously registered), and adding parent-child association (physical termination - logical termination, Sub path - path).

Subsequently, the reconciliation engine 138 may add the attribute data corresponding to the network entity in the service management database 118 to reconcile the discrepancies. The reconciliation engine 138 may further determine if the one or more network entities are registered with the service management database 118. In case any of the network entities is not registered with the service management database 118, the reconciliation engine 138 may add the attribute data corresponding to the network entity. As will be understood, the reconciliation engine 138 may reconcile the discrepancies in a manner similar to the method described for L1. Further, the notification dispatcher 142 may generate and transmit batch results for L3 to the user device 108.

Upon completion of network entity discovery for L3, the scheduler may initiate network entity discovery for the fourth discovery level, L4. On receiving a L4 discovery request, the mediation engine 130 may obtain the attribute data corresponding to a plurality of network entities existing in the communication network at L4. As previously described, the mediation engine 130 may obtain the attribute data from either the network entities, i.e., services, such as RFS existing at L4 in the communication network or from the network management system 110. The mediation engine 130 may then transform the attribute data using a normalized format to obtain a network snapshot. The network snapshot for L4 may then be processed in a manner as described for L1 to compute the network entity delta.

Further, the audit engine 136 may then process the network entity delta to ascertain if any network entity has been added at L4 since capturing of a preceding network snapshot and has not been registered and activated in a manner as described for L3. In case, the audit engine 136 ascertains at least one network entity, existing at the predetermined discovery level (L4), that was not registered in the service management database 118, the audit engine 136 may update the reconciliation engine 138 to update the service management database 118 to register and activate the network entity. The audit engine 136 may further send the service stitching request to the service stitching module 140 for service stitching. On receiving the service stitching request, the service stitching module 140 may obtain an entity catalog associated with the at least one network entity and determine the one or more network entities having parent-child relationship with the at least one network entity, in a manner as described for L3. The service stitching module 140 may subsequently define associations between the at least one network entity and the one or more network entities, in a manner as described for L3. Subsequently, the reconciliation engine 138 may add the attribute data corresponding to the network entity in the service management database 118 to reconcile the discrepancies. The reconciliation engine 138 may further determine if the one or more network entities are registered with the service management database 118. In case any of the network entities are not registered with the service management database 118, the reconciliation engine 138 may add the attribute data corresponding to the network entity. As will be understood, the reconciliation engine 138 may reconcile the discrepancies in a manner similar to the method described for L1. Further, the notification dispatcher 142 may generate and transmit batch results for L4 to the user device 108.

Referring to the previous example of the EPIPE model 150 as illustrated in the Figure 1(b), on receiving the L1 discovery request, the mediation engine 130 may obtain the attribute data corresponding to network equipment, i.e., nodes 152-1 and 152-2 associated with L1 for the EPIPE model. The nodes 152-1 and 152-2 may then be processed by the system 102 to determine if they have been previously registered and activated or not. In case any of the nodes 152-1 and 152-2 has not been previously registered and activated, the reconciliation engine 138 may update the service management database 118 to register and activate the node.

Upon completion of network entity discovery for L1, the scheduler may initiate network entity discovery for L2. On receiving the L2 discovery request, the mediation engine 130 may obtain the attribute data corresponding to resources, such as shelf, slot, and card associated with the nodes 152-1 and 152-2. The discovered resources may then be processed to determine if they have been previously registered and activated or not. In case any of the resources has not been previously registered and activated, the reconciliation engine 138 may update the service management database 118 to register and activate the resource. The notification dispatcher 142 may subsequently generate and transmit batch results for L2 of the EPIPE model to the user device 108.

Upon completion of network entity discovery for L2, the scheduler may initiate network entity discovery for L3. On receiving the L3 discovery request, the mediation engine 130 may obtain the attribute data corresponding to logical terminations, such as SAP1, SAP2, TP1, TP2, spoke1, spoke2, channel group, lag group, and IP interface and inter-element connections, such as links and paths, like EPIPE subpath existing at L3 in the communication network associated with the nodes 152-1 and 152-2. The discovered logical terminations and inter-element connections may then be processed to determine if they have been previously registered and activated or not. In case any of the network entity, i.e., the logical terminations and inter-element connections have not been previously registered and activated, the service stitching module 140 may perform service stitching for the network entity.

For instance, if the EPIPE subpath was not previously registered, the service stitching module 140 may initially obtain an entity catalog associated with the EPIPE subpath based on one or more predefined service stitching rules. The service stitching module 140 may then analyze the entity catalog to determine the one or more network entities having parent-child relationship with the EPIPE subpath. In one example, the service stitching module 140 may determine that the EPIPE subpath has a parent-child relationship with a logical termination, say, SAP1, SAP2, spoke 1 and spoke2 and thus has to be associated with it. The service stitching module 140 may further obtain entity catalogs associated with each of the logical termination to determine if further network entities have to be associated with the one or more network entities. For instance, the service stitching module 140 may determine that the logical terminations SAP1, SAP2, spoke1 and spoke2 have a parent-child relationship with further physical terminations and network entities, such as nodes 152-1 and 152-2, and have to be associated with the nodes.

The service stitching module 140 may further update the audit result to indicate that the network entities discovered or determined through associations defined in the entity catalogs for L3 include L2 SAP Termination, L2 Spoke Termination, EPIPE Subpath (SAP-Spoke subpath), and association between L2 SAP Termination and Port Terminations (discovered in discovery Level 2). Further, the service stitching module 140 may determine if spoke-to-spoke path and EPIPE service path exist in the service management database 118 or not. In case, the spoke-to-spoke path and EPIPE service path exist in the service management database 118, the service stitching module 140 may create associations of other network entities with the spoke-to-spoke path and EPIPE service path. In case, the spoke-to-spoke path and EPIPE service path do not exist in the service management database 118, the service stitching module 140 may initially derive the spoke-to-spoke path and EPIPE service path and the create associations of other network entities with the spoke-to-spoke path and EPIPE service path.

Subsequently, the reconciliation engine 138 may add the attribute data corresponding to the network entities in the service management database 118 to reconcile the discrepancies. Further, the notification dispatcher 142 may generate and transmit batch results for L3 to the user device 108. In said example, upon completion of the discovery and service stitching, the following associations may be determined and recorded:
*EPIPE Subpath: Association between path and L2SAPTerm,*
*Spoke-to-Spoke path: Association between path and L2SpokeTerm,*
*EPIPE service path: Association between service path and EPIPE Subpath*/ *Spoke-to-Spoke path*

Upon completion of network entity discovery for L3, the scheduler may initiate network entity discovery for L4. On receiving the L4 discovery request, the mediation engine 130 may obtain the attribute data corresponding to service, such as EPIPE RFS existing at L4 in the communication network associated with the nodes 152-1 and 152-2. The discovered services may then be processed to determine if they have been previously registered and activated or not. In case any of the services has not been previously registered and activated, the service stitching module 140 may perform service stitching for the service.

For instance, if the EPIPE RFS was not previously registered, the service stitching module 140 may initially obtain an entity catalog, say, a RFS catalog associated with the EPIPE RFS based on one or more predefined service stitching rules. The service stitching module 140 may then analyze the entity catalog to determine the one or more network entities having parent-child relationship with the EPIPE RFS. In one example, the service stitching module 140 may determine that the EPIPE RFS has a parent-child relationship with the CFS Broadband he EPIPE service path and thus has to be associated with them. As will be understood, the Broadband CFS will be the parent of the EPIPE RFS, while the EPIPE service path will be a child of the EPIPE RFS. Thus, the network entities and associations discovered or determined through associations defined in the entity catalogs for L4 may include EPIPE Service (if non-existent in the service management database 118), association between EPIPE RFS and EPIPE Service Path, Broadband CFS (if non-existent in the service management database 118), and association between Broadband CFS and EPIPE RFS (if Broadband CFS exists in the service management database 118).

The service stitching module 140 may further update the audit result for performing at least one of adding / updating of current service (RFS), adding parent service (CFS), and adding parent-child association (for example, Broadband CFS - EPIPE RFS, EPIPE RFS - EPIPE service path). The reconciliation engine 138 may then add the attribute data corresponding to the network entities in the service management database 118 to reconcile the discrepancies. Further, the notification dispatcher 142 may generate and transmit batch results for L4 to the user device 108. In said example, upon completion of the discovery and service stitching, the following associations may be determined and recorded:
*EPIPE RFS - EPIPE Service Path*
*Broadband CFS - EPIPE RFS*

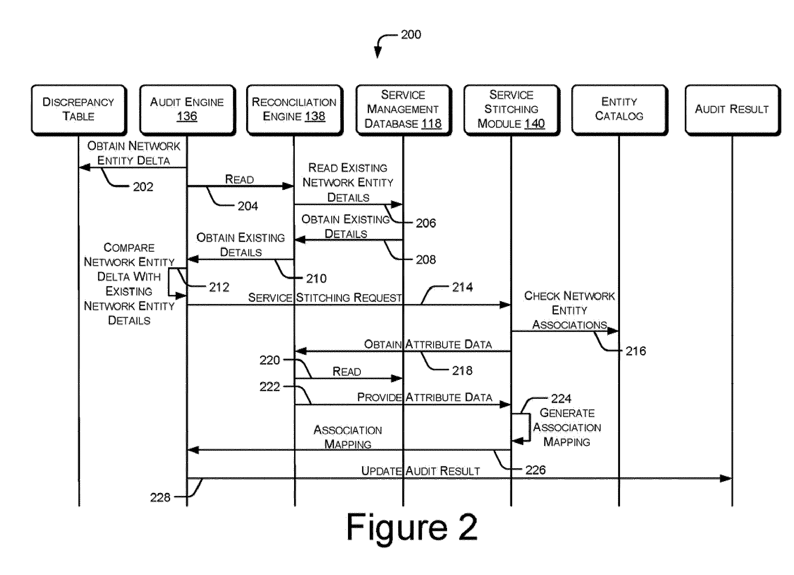

Figure 2 illustrates an exemplary call flow diagram 200 indicating procedures of service stitching of network entities, according to an embodiment of the present subject matter. The various arrow indicators used in the call-flow diagram 200 depict the transfer of data between the various entities in the network environment 100. Further, certain trivial steps have been omitted in the sequence diagrams, for the sake of brevity and clarity.

In one implementation, the audit engine 136 initially obtains the network entity delta and the same is indicated by step 202. As described in conjunction with Figure 1, the audit engine 136 initially obtains the network entity delta from the data discrepancy table stored in the discovery database 114. The audit engine 136 then requests a recon adapter of the reconciliation engine 138 to read, in the service management database 118, the data already saved about the network entity identified in the network entity data and the same is indicated by step 204. The reconciliation engine 138 may then read the existing network entity details in the service management database 118 and the same is indicated by step 206. Further, the recon adapter of the reconciliation engine 138 may obtain the details about the network entities presently registered in the service management database 118, and the same is indicated by step 208. The details about the network entities presently registered in the service management database 118 is then transmitted to the audit engine 136 as indicated by step 210 and is compared with the network entity delta by the audit engine 136, as indicated by step 212.

The audit engine 136 may then send the service stitching request to the service stitching module 140, as indicated by step 214. The service stitching module 140 may access the entity catalog to check if the network entity associations as discovered are valid, as indicated by step 216. The service stitching module 140 may then request the recon adapter of the reconciliation engine 138 to obtain attribute data about the network entities associated with the identified network entity, as indicated by step 218. The reconciliation engine 138 may then read the attribute data from the service management database 118, as indicated by step 220 and provide the attribute data to the service stitching module 140, as indicated by step 222. Further, the recon adapter of the reconciliation engine 138 may obtain the details about the network entities presently registered in the service management database 118, and the same is indicated by step 208.

The service stitching module 140 may then generate association mapping for the network entities, as indicated by step 224 and provide the same to the audit engine 136, as indicated by step 226. The audit engine 136 may subsequently update audit results to include the association mapping, as indicated by step 228, for being used by the reconciliation engine 138.

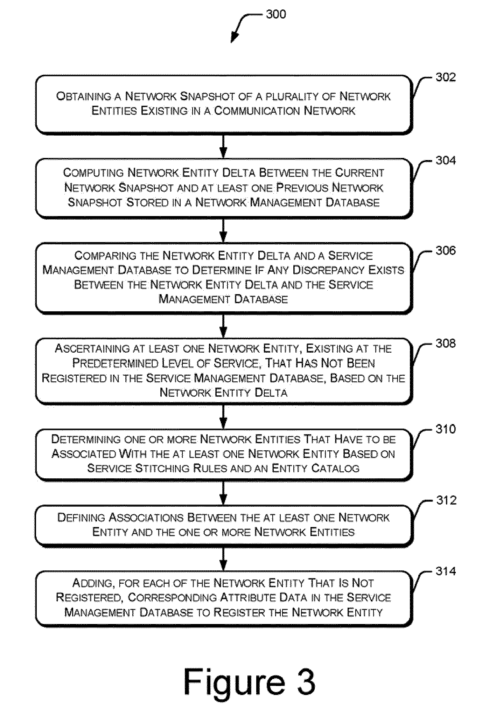

Figures 3, 4, and 5 illustrate methods 300, 400, and 500, respectively, in accordance with an embodiment of the present subject matter. The order in which the method is described is not intended to be construed as a limitation, and any number of the described method blocks can be combined in any order to implement the methods 300, 400, and 500 or any alternative methods. Additionally, individual blocks may be deleted from the methods without departing from the spirit and scope of the subject matter described herein. Furthermore, the methods can be implemented in any suitable hardware, software, firmware, or combination thereof.

The methods may be described in the general context of computer executable instructions. Generally, computer executable instructions can include routines, programs, objects, components, data structures, procedures, modules, functions, etc., that perform particular functions or implement particular abstract data types. The methods may also be practiced in a distributed computing environment where functions are performed by remote processing devices that are linked through a communications network. In a distributed computing environment, computer executable instructions may be located in both local and remote computer storage media, including memory storage devices.

A person skilled in the art will readily recognize that steps of the methods 300 and 400 can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described methods. The program storage devices may be, for example, digital memories, magnetic storage media, such as a magnetic disks and magnetic tapes, hard drives, or optically readable digital data storage media. The embodiments are also intended to cover both communication network and communication devices configured to perform said steps of the exemplary methods.

The methods 300, 400, and 500 may be performed by a computing system, such as the system 102. For the sake of brevity of description of Figures 3, 4, and 5, the components of the system 102 performing the various steps of the methods 300, 400, and 500 are not described in detail with reference to Figures 3, 4, and 5. Such details are provided in the description provided with reference to Figure 1(a).

Figure 3 illustrates the method 300 for network entity discovery and stitching, according to an embodiment of the present subject matter.

At block 302, a network snapshot of a plurality of network entities existing in a communication network is obtained. The network snapshot indicates attribute data corresponding to the plurality of network entities correspond to a predetermined discovery level of the communication network. In one example, initially attribute data corresponding to the plurality of network entities is obtained. The attribute data is then transformed into the network snapshot of a normalized format.

At block 304, network entity delta between the network snapshot and at least one previous network snapshot is computed. The network entity delta indicates modifications made to the predetermined level of service since capturing of a preceding network snapshot. In one example, the previous network snapshot may be stored in a network management database.

At block 306, the network entity delta and a service management database is compared to determine if any discrepancy exists between the network entity delta and the service management database. The discrepancy indicates that at least one network entity has not been registered in the service management database. In one example, the service management database includes attribute data of registered network entities.

At block 308, the at least one network entity, existing at the predetermined level of service that has not been registered in the service management database, is ascertained, based on the network entity delta. In one example, the at least one network entity is identified in the discrepancy.

At block 310, one or more network entities that have to be associated with the at least one network entity are determined. In one example, the network entities are determined based on the service stitching rules and an entity catalog. The entity catalog defines attributes of the corresponding network entity and parent-child relationship between the corresponding network entity and another network entity. In one example, initially an entity catalog corresponding to the at least one network entity is obtained based on the service stitching rules. The entity catalog is then analyzed to determine the one or more network entities that have to be associated with the at least one network entity.

At block 312, associations between the at least one network entity and the one or more network entities are defined. In one example, upon determining the one or more network entities, a corresponding entity catalog is obtained for each of the one or more network entities.

At block 314, for each of the network entity that is not registered, corresponding attribute data is added in the service management database to register the network entity. In one example, the attribute data corresponding to the at least one network entity is added in the service management database to register the at least one network entity. Further, it is determined, for each of the one or more network entities, if the network entity is registered with the service management database. For each of the network entity that is not registered, corresponding attribute data is added in the service management database to register the network entity.

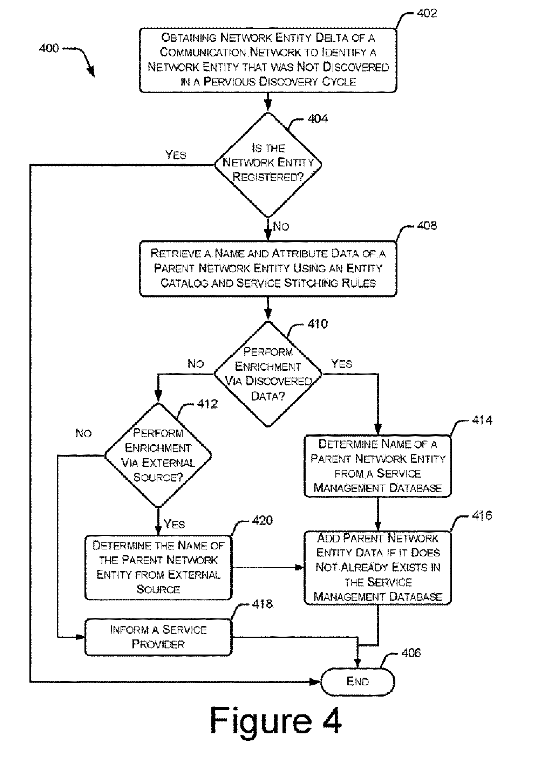

Figure 4 illustrates the method 400 for reconciliation of network entities for service stitching, according to an embodiment of the present subject matter.

At block 402, a network entity delta is obtained. In one example, the network entity delta may be used to identify a network entity that was not discovered in a previous discovery cycle. As will be understood, the network entity delta includes attribute data about the network entity that has been added at a predetermined discovery level since the preceding discovery cycle.

At block 404, it is determined whether the network entity has been previously registered or not. For example, if attribute data corresponding to the network entity is available in a service management database, the network entity is determined to have been previously registered ('Yes' path from block 404). In such a case, no action will be performed and the process ends (block 406). If in case it is determined that the network entity has not been previously registered, ('No' path from block 404), name and attribute data of a parent network entity corresponding to the network entity are retrieved at the block 408. In one example, the name and attribute data of the parent network entity are obtained using an entity catalog and service stitching rules associated with the network entity.

At block 410, it is determined whether the name and attribute data of the parent network entity have to be enriched using discovered data or not. For example, if the discovery data can not be used for enrichment ('No' path from block 410). In such a case, the name and attribute data are further analyzed at block 412. If in case it is determined that the name and attribute data of the parent network entity can be enriched using discovered data, ('Yes' path from block 410), name of the parent network entity is determined from a service management database at the block 414. In one example, the name of the parent network entity is obtained using an entity catalog and service stitching rules associated with the network entity.

At block 416, details about the parent network entity are added in the service management database if the details about the parent network entity do not exist in the service management database. The process then ends at block 406.

At block 412, it is determined whether the name and attribute data of the parent network entity have to be enriched using external source or not. For example, if the external source can not be used for enrichment, ('No' path from block 412). In such a case, a service provider is informed about the error in enrichment at block 418. If in case it is determined that the name and attribute data of the parent network entity can be enriched using the external source, ('Yes' path from block 412), name of the parent network entity is determined from the external source at the block 420. The process then moves to the block 416, where details about the parent network entity are added in the service management database if the details about the parent network entity do not exist in the service management database.

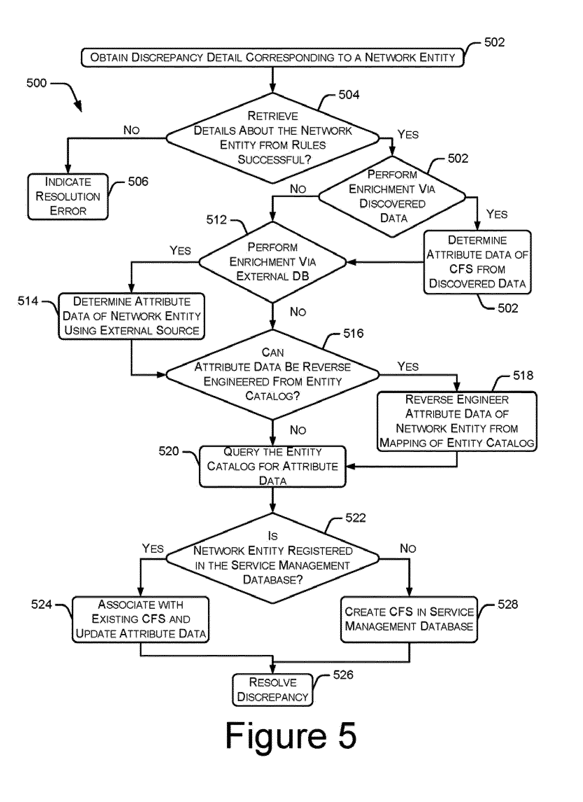

Figure 5 illustrates the method 500 for reconciliation of network entities for service stitching, according to an embodiment of the present subject matter.

At block 502, discrepancy detail corresponding to a network entity is obtained. In one example, the discrepancy detail is obtained based on analysis as described with reference to Figure 4. Further, the discrepancy detail indicates that attribute data about the network entity does not exist in service management database.

At block 504, it is determined whether detail about the network entity can be obtained from service stitching rules. If detail about the network entity can not be obtained from service stitching rules, ('No' path from block 504), a resolution error is indicated at block 506. If in case it is determined that the detail about the network entity can be obtained from service stitching rules, ('Yes' path from block 504), it is further determined at the block 508, whether enrichment can be performed using discovered data. If enrichment can be performed using discovered data, ('Yes' path from block 508), attribute data corresponding to the network entity is determined using the discovered data at block 510, from which the process moves to block 512. If in case it is determined that the enrichment can not be performed using discovered data, ('No' path from block 508), the process moves to the block 512.

At block 512, it is determined whether enrichment can be performed using external database. If enrichment can be performed using external database, ('Yes' path from block 512), attribute data corresponding to the network entity is determined using the external database at block 514, from which the process moves to block 516. If in case it is determined that enrichment can not be performed using external database, ('No' path from block 512), it is further determined at the block 516, whether attribute data can be reverse engineered from entity catalogs. If it is determined that the attribute data can be reverse engineered from entity catalogs, ('Yes' path from block 516), attribute data corresponding to the network entity is determined by reverse engineering entity catalogs mappings at block 518, from which the process moves to block 520. If in case it is determined that the attribute data can not be reverse engineered from entity catalogs, ('No' path from block 516), an attribute data request in the form of a query is sent to the entity catalog at the block 520.

At block 522, it is determined if the network entity is registered in the service management database. If the network entity is registered in the service management database, ('Yes' path from block 522), a child, identified in the Figure 4, of the network entity is associated with the network entity existing in the service management database at block 524. The process further moves to block 526 to indicate that the discrepancy identified in the Figure 4 has been resolved. If in case it is determined that network entity is not registered in the service management database, ('No' path from block 522), the network entity is registered in the service management database at block 528. The process further moves to the block 526 to indicate that the discrepancy identified in the Figure 4 has been resolved.

Although implementations for the present subject matter have been described in language specific to structural features and/or methods, it is to be understood that the implementations described are not necessarily limited to the specific features or methods described. Rather, the specific features and methods are disclosed as mere explanations.

## Claims

1. A method comprising:
obtaining a network snapshot of a plurality of network entities existing in a communication network, the network snapshot indicating attribute data corresponding to the plurality of network entities, wherein the plurality of network entities correspond to a predetermined discovery level of the communication network;
computing network entity delta between the network snapshot and at least one previous network snapshot stored in a network management database (112), wherein the network entity delta indicates modifications made to the predetermined discovery level since capturing of a preceding network snapshot;
ascertaining at least one network entity, existing at the predetermined discovery level, that was not previously registered in a service management database (118), based on the network entity delta; and
service stitching the at least one network entity with one or more network entities based on service stitching rules and entity catalogs, wherein the service stitching defines associations between the at least one network entity and the one or more network entities for activating the at least one network entity, and wherein each entity catalog defines attributes of the corresponding network entity and parent-child relationship between the corresponding network entity and another network entity.

2. The method as claimed in claim 1, wherein the ascertaining further comprising:
comparing the network entity delta and the service management database (118), wherein the service management database includes attribute data of registered network entities;
determining if any discrepancy exists between the network entity delta and the service management database (118) based on the comparison, wherein the discrepancy indicates that the at least one network entity has not been registered, and wherein the at least one network entity has been added at the predetermined discovery level since capturing of the preceding network snapshot; and
generating audit results including the discrepancy and severity of the discrepancy based on the determining.

3. The method as claimed in claim 2, wherein the service stitching further comprising:
obtaining an entity catalog corresponding to the at least one network entity based on the service stitching rules;
determining the one or more network entities that have to be associated with the at least one network entity based on the service stitching rules and the entity catalog, wherein the one or more network entities have a parent-child relationship with the at least one network entity;
obtaining, for each of the one or more network entities, a corresponding entity catalog; and
defining associations between the at least one network entity and the one or more network entities based on the associated entity catalogs.

4. The method as claimed in claim 3, wherein the service stitching further comprising:
adding the attribute data corresponding to the at least one network entity in the service management database (118) to register the at least one network entity.

5. The method as claimed in claim 4, wherein the service stitching further comprising:
determining, for each of the one or more network entities, if the network entity is registered with the service management database (118); and
adding, for each of the network entity that is not registered, corresponding attribute data in the service management database (118) to register the network entity.

6. The method as claimed in claim 1, wherein the obtaining a network snapshot further comprising:
obtaining attribute data corresponding to the plurality of network entities; and
transforming the attribute data into the network snapshot of a normalized format.

7. The method as claimed in claim 1, wherein for the predetermined discovery level being a third discovery level, the plurality of network entities include logical terminations and inter-element connections existing in the communication network.

8. The method as claimed in claim 1, wherein for the predetermined discovery level being a fourth discovery level, the plurality of network entities include services implemented in the communication network.

9. A network entity discovery and stitching system (102) comprising:
a processor (120);
a mediation engine (130) coupled to the processor (120) to:
obtain a network snapshot of a plurality of network entities existing in a communication network, the network snapshot indicating attribute data corresponding to the plurality of network entities, wherein the plurality of network entities correspond to a predetermined discovery level of the communication network;
a discovery engine (132) coupled to the processor (120) to:
compute network entity delta between the network snapshot and at least one previous network snapshot stored in a network management database (112), wherein the network entity delta indicates modifications made to the predetermined discovery level since capturing of a preceding network snapshot;
an audit engine (136) coupled to the processor (120) to:
ascertain at least one network entity, existing at the predetermined discovery level, that was not registered in a service management database (118), based on the network entity delta; and
a service stitching module (140) coupled to the processor (120) to:
service stitch the at least one network entity with one or more network entities based on service stitching rules and entity catalogs, wherein the service stitching defines associations between the at least one network entity and the one or more network entities for activating the at least one network entity, and wherein each entity catalog defines attributes of the corresponding network entity and parent-child relationship between the corresponding network entity and another network entity.

10. The network entity discovery and stitching system (102) as claimed in claim 9, wherein the audit engine (136) further is to:
compare the network entity delta and a service management database (118), wherein the service management database (118) includes attribute data of registered network entities;
determine if any discrepancy exists between the network entity delta and a service management database (118) based on the comparison, wherein the discrepancy indicates that the at least one network entity has not been registered, and wherein the at least one network entity has been added at the predetermined discovery level since capturing of the preceding network snapshot; and
generate audit results including the discrepancy and severity of the discrepancy based on the determining.

11. The network entity discovery and stitching system (102) as claimed in claim 10, wherein the service stitching module (140) further is to:
obtain an entity catalog corresponding to the at least one network entity based on the service stitching rules;
determine the one or more network entities that have to be associated with the at least one network entity based on the service stitching rules and the entity catalog, wherein the one or more network entities have a parent-child relationship with the at least one network entity;
obtain, for each of the one or more network entities, a corresponding entity catalog; and
define associations between the at least one network entity and the one or more network entities based on the associated entity catalogs.

12. The network entity discovery and stitching system (102) as claimed in claim 11, further comprising a reconciliation engine (138) coupled to the processor (120) to:
add the attribute data corresponding to the at least one network entity in the service management database (118) to register the at least one network entity;
determine, for each of the one or more network entities, if the network entity is registered with the service management database (118); and
add, for each of the network entity that is not registered, corresponding attribute data in the service management database (118) to register the network entity.

13. The network entity discovery and stitching system (102) as claimed in claim 9, wherein for the predetermined discovery level being a third discovery level, the plurality of network entities include logical terminations and inter-element connections existing in the communication network.

14. The network entity discovery and stitching system (102) as claimed in claim 9, wherein for the predetermined discovery level being a fourth discovery level, the plurality of network entities include services implemented in the communication network.

15. A non-transitory computer readable medium having a set of computer readable instructions that, when executed, causes a processor to:
obtain a network snapshot of a plurality of network entities existing in a communication network, the network snapshot indicating attribute data corresponding to the plurality of network entities, wherein the plurality of network entities correspond to a predetermined discovery level of the communication network;
compute network entity delta between the network snapshot and at least one previous network snapshot stored in a network management database (112), wherein the network entity delta indicates modifications made to the predetermined discovery level since capturing of a preceding network snapshot;
ascertain at least one network entity, existing at the predetermined discovery level, that was not registered in a service management database (118), based on the network entity delta; and
service stitch the at least one network entity with one or more network entities based on service stitching rules and entity catalogs, wherein the service stitching defines associations between the at least one network entity and the one or more network entities for activating the at least one network entity, and wherein each entity catalog defines attributes of the corresponding network entity and parent-child relationship between the corresponding network entity and another network entity.
